# EUROPÄISCHE PATENTSCHRIFT

(11) **EP 0 567 454 B1**
(45) Veröffentlichungstag und Bekanntmachung des Hinweises auf die Patenterteilung: **02.11.1994**
(21) Anmeldenummer: 91912048.5
(22) Anmeldetag: 28.06.1991
(51) Int. Cl.: B22C 1/16

(54) **VERFAHREN UND BINDER ZUR HERSTELLUNG VON KERAMISCHEN SCHALEN ALS GIESSFORM**
PROCESS AND BINDER FOR PRODUCING CERAMIC SHELLS AS CASTING MOULDS
PROCEDE ET LIANT POUR FABRIQUER DES COQUILLES CERAMIQUES SERVANT DE MOULE DE COULEE

(30) Priorität: 19.01.1991 DE 4101501; 22.05.1991 DE 4116609
(43) Veröffentlichungstag der Anmeldung: 03.11.1993
(73) Patentinhaber: THYSSEN INDUSTRIE AG, 45128 Essen (DE)
(72) Erfinder: BALLEWSKI, Heinrich, D-4133 Neukirchen-Vluyn (DE); GRAF, Herbert, D-4130 Moers 1 (DE); GROSSMANN, Wolfgang, D-4130 Moers 2 (DE)
(74) Vertreter: Dahlkamp, Heinrich-Leo, Dipl.-Ing.
(86) Internationale Anmeldenummer: EP9101217
(87) Internationale Veröffentlichungsnummer: WO9212813

(56) Entgegenhaltungen:
- DE-A- 519 309
- FR-A- 2 107 640
- US-A- 3 005 244
- US-A- 3 745 139
- WORLD PATENT INDEX, FILE SUPPLIER abstract AN=87/340640-48, Derwent Publ. Ltd., London, GB; & SU-A-1 304 972

## Beschreibung

Die Erfindung betrifft ein Verfahren zur Herstellung von keramischen Schalen als Gießform gemäß Oberbegriff der Ansprüche 1 und 2 und einen Binder gemäß Oberbegriff des Anspruches 9.

Bei einem derartigen Verfahren werden Modelltrauben aus Wachs oder dergleichen durch Aufbringen von mehreren Tauchüberzügen mit einer stabilen Keramikschicht von einigen Millimetern Stärke versehen. Die einzelnen Schichten werden jeweils getrocknet oder ausgehärtet. Auf die einzelnen feuchten Tauchschichten wird grobes, feuerfestes Pulver bzw. Sand als Bindeglied zu der dann folgenden Tauchschicht aufgestreut. Die Schalen werden nach dem Entwachsen gebrannt und können dann warm oder nach der Abkühlung abgegossen werden.

Verfahren der eingangs beschriebenen Gattung, die mit wässrigen Bindern arbeiten, sind dadurch Grenzen gesetzt, daß wässrige Binder im Gegensatz zu alkoholischen Bindern eine sehr langwierige Trocknung verlangen und letztlich sogar zur vollständigen Trocknung einer entsprechenden Vakuumtrocknung unterzogen werden mußten. Man hat versucht, durch Einmischen von Alkohol, z.B. Isopropanol, in den wässrigen Binder diese Schwierigkeiten zu umgehen. Der Alkohol ersetzte einen Teil des Wassers und hatte die Eigenschaft, schneller als Wasser zu verdunsten. Durch den Alkohol wurde allerdings nicht verhindert, daß in die bereits getauchte und getrocknete Schicht beim nachfolgenden Tauchen das Wasser-Alkohol-Gemisch wieder eindrang und dadurch bei fortschreitendem Tauchen immer längere Trocknungszeiten erforderlich wurden. Man hat auch auf andere Weise versucht, die anstehenden Probleme zu lösen.

Aus US-Patent 3,005,244 ist bekannt, einem 30%igen wässrigen Silikasol-Binder harzartige Polymere (resinous polymers) in der Menge zuzusetzen, daß der Feststoffanteil des so entstandenen Binders aus 60 - 80 Gew.% SiO₂ und 8 - 35 Gew.% harzartigem Polymer besteht. Keramische Schalen, die mit diesem Binder gefertigt werden, weisen u.a. durch den Polymerzusatz eine erhöhte Grünfestigkeit der Schale auf, wodurch ohne Zwischenschaltung eines Autoklaven das Ausschmelzen des Wachses aus der Schale möglich sein soll.

US-Patent 3,126,597 beschreibt eine keramische Schale mit einem wässrigen Binder auf Kieselsäurebasis (30 Gew.%), dem zur Verdünnung Wasser und zur Beschleunigung der Sol/Gelreaktion Natrium-Fluorid zugesetzt wird. Das Natrium-Fluorid bedingt lediglich eine schnellere Aushärtung der einzelnen aufgebrachten keramischen Schichten, verhindert jedoch nicht das Eindringen des wässrigen Binders beim nachfolgenden Tauchen in die vorhergehenden Keramikschichten. Diese Binderkombination verlangt lange Trockenzeiten und bei Schalen mit höherer Schichtenzahl letztlich Vakuumtrocknung.

US-Patent 3,165,799 beschreibt ein Dreifach-Tauchverfahren zur Erzeugung einer keramischen Schale für kernreichen Feinguß, bei dem die 1. keramische Tauchschicht mit einem wässrigen Binder mit anschließender Besandung aufgebracht wird. Danach wird eine 2. keramische Tauchschicht mit wässrigem Binder, dem 0.5 - 2 Gew.% Polyvinylalkohol zugesetzt sind, ohne Besandung aufgebracht. Danach erfolgt im Unterdruck das Aufbringen einer 3. keramischen Tauchschicht, bestehend aus dem wässrigen SiO₂-Binder mit 0.5 - 2 Gew.% Polyvinylalkohol mit abschließender Besandung. Obige Tauchfolge hat den Vorteil, daß man Feingußteile mit Kernpartien fertigen kann, die sonst nur durch keramische Kerne herstellbar sind.

Aus US-Patent 3,752,689 ist die Herstellung einer keramischen Schale im Schnellverfahren mit einem wässrigen Binder mit 26.4 Gew.% SiO₂ und 4.2 Gew.% Al₂O₃ bekannt, wobei obiger Binder durch organische bzw. anorganische Basen vom Solin den Gelzustand überführt wird. Dieses Verfahren erlaubt ein relativ schnelles Aufbringen der einzelnen Keramikschichten, hat aber den Nachteil, daß jede Keramikschicht von der nachfolgenden aufgebrachten Keramikschicht durch den wässrigen Binder infiltriert wird und daß eine langwierige Schlußtrocknung u.a. im Vakuum durchgeführt werden muß. Die Idee ist, das saure SiO₂/Al₂O₃-Sol, welches positiv geladen ist, durch negativ geladene Teilchen organischer und anorganischer Basen zu entladen.

US-Patent 3,859,153 beschreibt ebenfalls ein Schnellverfahren zur Herstellung einer keramischen Schale, bei dem ein wässriger Binder mit negativ geladenen kolloidalen Partikeln durch ein wässriges Sol mit positiv geladenen kolloidalen Partikeln entladen und somit ausgehärtet wird. Auch dieses Verfahren erlaubt das schnelle Aufbringen der einzelnen Keramikschichten, hat allerding den Nachteil, daß eine Entladung des negativ geladenen Sols durch das aufgebrachte positiv geladene Sol bereits im Tauchtank erfolgen kann. Ebenfalls haftet diesem Verfahren der Nachteil an, daß die dadurch hergestellte Schale einer entsprechend langen Endtrocknung unterworfen werden muß. Ein weiterer Nachteil ist, daß die Schalen durch dauernde Infiltration beim Tauchen mit wässrigem Binder so schwer werden, daß sie bruchgefährdet sind. Eine anschließende Vakuumtrocknung ist aus wirtschaftlichen Gründen unumgänglich.

US-Patent 3,894,572 beschreibt das Herstellungsverfahren für eine keramische Schale mit einem positiv geladenen wässrigen Binder, der durch das Besandungsmaterial, welches negativ geladene kolloide Partikel enthält, ausgehärtet wird. Die Nachteile sind die gleichen, wie wir sie bei vorgenannten beiden Schnellverfahren beschrieben haben.

US-Patent 3,933,190 beschreibt ein Verfahren zur Herstellung einer reinen Al₂O₃-Schale für die gerichtete Erstarrung. Die keramische Schale wird mit 15 - 25 Teilen einer wässrigen Lösung angemacht, die 15 Gew.% Aluminium-Polyoxydchlorid, 6 - 10 Teile Wasser und 8 - 14 Teile Latex enthält. Zu dieser Flüssigkeit wird als Füller Al₂O₃-Mehl gegeben. Zur pH-Kontrolle des Binders werden 0.5 - 1.5 Teile einer 2%igen wässrigen HCL-Lösung zugegeben. In diesem Fall hat der Latexzusatz die Funktion, die Grünfestigkeit der aufgebrachten keramischen Schichten zu erhöhen. Alle Nachteile, wie sie für das Schnellverfahren beschrieben werden, sind auch bei dieser Schale relevant.

Aufgabe der Erfindung ist es, ein gattungsgemäßes Verfahren und einen Binder anzugeben, mit dem schnelltrocknende Schalen hergestellt werden können, wobei die Trocknungszeit vergleichbar ist mit der Trocknungszeit von Schalen, die auf der Grundlage alkoholischer Binder hergestellt werden.

Diese Aufgabe wird durch die im Kennzeichen der Ansprüche 1 und 2 angegebenen Maßnahmen gelöst. Die Ansprüche 3 bis 9 enthalten sinnvolle ergänzende Maßnahmen und detaillierte Stoffbeschreibungen.

Bei Verwendung von Hochpolymeren, insbesondere Hochpolymeren mit hydrophobierendem und/oder hydrophobem Charakter, entsteht auf der Tauchschicht, die auch als Back-up-Schicht bezeichnet wird, ein Film, der zwar für Wasser undurchlässig ist, für Wasserdampf jedoch durchlässig ist und somit eine abschließende Trocknung bzw. Nachtrocknung der keramischen Schichten, die die Schale bilden, erlaubt. Wird eine neue Tauchschicht aufgebracht, so kann der Binder der nachfolgend aufgebrachten nassen Tauchschicht nicht in die bereits getrocknete oder partiell getrocknete und besandete Tauchschicht eindringen. Das Trocknen der noch feuchten Tauchschichten kann auf übliche Weise, gegebenenfalls mit Ventilatorunterstützung, erfolgen. Die Grünfestigkeit der so hergestellten keramischen Schalen ist ebenso zufriedenstellend, wie die Festigkeit nach dem Brennen. Schalenfehler durch Risse oder Warmrisse in den Gußstücken werden nicht beobachtet.

Durch entsprechende, in den Ansprüchen 1 und 2 angegebene Dosierung der synthetischen Hochpolymere und/oder einer Emulsion aus der Gruppe der siliciumorganischen Verbindungen in bezug auf das wässrige Kieselsol und auch durch Variation des feuerfesten Materials, welches als Füller dient, läßt sich die Tauchmasse den jeweiligen Verhältnissen oder Erfordernissen anpassen. Bei einer Zugabe von 2 - 20 Vol.%, vorzugsweise von 3 - 7 Vol.% eines synthetischen Hochpolymers hat es sich als günstig erwiesen, einen Zusatz von 0,2 - 20 Gew.%, bezogen auf das Gewicht des synthetischen Hochpolymers, einer Emulsion aus der Gruppe der siliciumorganischen Verbindungen zuzumischen.
Es hat sich weiterhin als günstig erwiesen, eine Emulsion aus der Gruppe der siliciumorganischen Verbindungen mit Tröpfchengrößen von < 200 nm zu verwenden. Außerdem kann das wässrige kolloidale Kieselsol 0 - 20 Gew.% vom Gesamtwassergehalt des Binders, insbesondere 0,005 - 15 Gew.% einer Emulsion aus der Gruppe der siliciumorganischen Verbindungen enthalten.

Ferner kann dem Binder auch ein Entspannungsmittel, insbesondere in einer Menge von 0.08 Vol.%, bezogen auf die Tauchmassenmenge, zugesetzt werden. Das Entspannungsmittel fördert die gleichmäßige Verteilung von kolloidalem Kieselsol, Hochpolymer und/oder einer Emulsion aus der Gruppe der siliciumorganischen Verbindungen und verbessert die Benetzbarkeit der Tauchmasse, ohne daß das Kieselsol, die Hochpolymere und/oder die Emulsion aus der Gruppe der siliciumorganischen Verbindungen angegriffen werden.

Um ein Entmischen des kolloidalen Kieselsols und der Hochpolymere bei langer Lagerung zu vermeiden, kann es vorteilhaft sein, die Dispersion aus wässrigem Kieselsol und synthetischen Hochpolymeren und/oder einer Emulsion aus der Gruppe der siliciumorganischen Verbindungen erst kurz vor dem Einsatz herzustellen und zur Tauchmasse zu verarbeiten.

Ein Hochpolymer, welches die gewünschten Eigenschaften aufweist, besitzt die folgenden Kenndaten:

| | |
|---|---|
| Festkörper | 50 +/- 1 Gew.% |
| Viskosität bei 20° C (D = 57⁻¹) | 800 - 1500 mPa.s |
| pH-Wert | 7.0 - 8.5 |
| Dichte | ca. 1.02 g/cm³ |
| Filmbeschaffenheit | zähelastisch, wasserfest, alkalibeständig |

Eine Emulsion aus der Gruppe der siliciumorganischen Verbindungen, die die gewünschten Eigenschaften aufweist, besitzt folgende Kenndaten:

| | |
|---|---|
| Festkörperanteil | 52 - 57 Gew.% |
| Viskosität | 25 mPa.s |
| Dichte | ca. 1 g/cm³ |
| Lösemittel | Wasser |
| pH-Wert | 7 - 9 |

Im folgenden wird die Erfindung anhand von Ausführungsbeispielen erläutert.

### Kenndaten des erfindungsgemäßen Verfahrens

| | |
|---|---|
| Binder | ca. 30%iges kolloidales Kieselsol oder andere wässrige kolloidale Silikasole |
| Verdünnungsmittel: | Bei Bedarf deionisiertes Wasser |
| Hochpolymer als filmbildendes Mittel: | Z.B. wässrige hochpolymere Dispersion mit hydrophobierendem und/oder hydrophobem Charakter und/oder einer Emulsion aus der Gruppe der siliciumorganischen Verbindungen |
| Füller: | Als Füller wird der keramische Feuerfeststoffzusatz bezeichnet, der in den kolloidalen Silikasolbinder mit Hochpolymerzusatz und/oder einer Emulsion aus der Gruppe der siliciumorganischen Verbindungen eingetragen wird, um die Back-up-Tauchmasse herzustellen. Er besteht zu ca. 45 Gew.% aus Fused Silica - 120 mesh bis < 350 mesh, ca. 45 Gew.% Mullitmehl 150 mesh und ca. 10 Gew.% Zirkon-Silikat 350 mesh |
| Besandungsmaterial für die 1. und 2. Schicht: | Zirkon-Silikat-Sand |
| Besandungsmaterial für die 3. Schicht: | Aluminium-Silikat |
| 3. Schicht = 1. Back-up-Schicht | |
| Besandungsmaterial für die 4. - nte Schicht: | Gemisch aus 50 % Mullit und 50 % Aluminium-Silikat, Körnung 0.3 - 1.0 mm |

### 1. Beispiel:

In einem Mischbehälter von 600 mm Durchmesser und 630 mm Höhe wurde folgende Back-up-Tauchmasse angesetzt:
1. Binder 41.5 Gew.% = 94 kg
2. Füller 58.5 Gew.% = 132 kg
3. Gesamtmenge
   Back-up-Tauchmasse 141 l = 226 kg
4. Die 94 kg Binder, entsprechend 82 l, bestehen aus:
   56 l wässrigem kolloidalem 30%igem Silikasol
   13 l Deionisiertem Wasser
   13 l Hochpolymer
5. Die 132 kg Füller bestehen aus:
   59,5 kg Fused Silica Mehl < 350 mesh
   59,5 kg Mullitmehl 150 mesh
   13 kg Zirkonmehl 350 mesh
Es ergab sich eine Becherauslaufviskosität nach Zahncup 2 von 22 s. Durch Erhöhung des Fülleranteils auf 63 Gew.% wurde die Auslaufviskosität nach Zahncup 2 auf 37 s erhöht und lag damit im Rahmen der Sollauslaufviskosität von 33 - 41 s.

Es wurden Wachstrauben aus der Produktion und 2 Trauben Biegeproben wie üblich mit dem 1. und 2. Tauchüberzug versehen und dann mit der Back-up-Tauchmasse obiger Zusammensetzung wie folgt getaucht:
1. Tauchen für die 1. Back-up-Schicht in der Back-up-Tauchmasse und Besanden mit Al-Silikat, Korngröße 0.3 - 0.5 mm, von Hand
2. Trocknung der aufgebrachten Back-up-Tauchmasse 2.5 bis 3 Stunden
3. Tauchen für die 2. Back-up-Schicht in der Back-up-Tauchmasse und Besandung mit 50 % Al-Silikat und 50 % Mullit 0.3 - 1 mm Körnung von Hand
4. Trocknung wie unter 2.
5. 3., 4. und 5. Back-up-Schicht wie unter 3. und 4.. Dieses bedeutet, daß die Schalen im 2-Schichtbetrieb fertiggestellt wurden.

Die relative Luftfeuchtigkeit betrug 50 +/- 5 %, Umgebungstemperatur = 23° +/- 1° C. Die Trocknung erfolgte teilweise mit Ventilatorunterstützung.

Die ausgebrachten kernreichen Gußstücke waren von sehr guter Qualität. Es wurden folgende mittlere Biegebruchfestigkeitswerte an keramischen Flachproben gemessen

| | |
|---|---|
| Zustand der keramischen Flachproben | σBB |
| Grün | 349 N/cm² |
| Gebrannt | 309 N/cm² |
| Gebrannt und nachgetaucht | 400 N/cm² |

### 2. Beipiel:

Es wurde in einem Produktionsmischbehälter folgende Backup-Tauchmasse angemischt:
1. Binder 37 Gew.% = 423 kg
2. Füller 63 Gew.% = 720 kg
3. Gesamtmenge der
   Back-up-Tauchmasse 630 l = 1143 kg
4. Die 423 kg Binder, entsprechend 367 l, bestehen aus:
   251 l wässrigem kolloidalem 30%igem Silikasol
   58 l Deionisiertem Wasser
   58 l Hochpolymer
5. Die 720 kg Füller bestehen aus:
   327.5 kg Fused Silica Mehl < 350 mesh
   327.5 kg Mullitmehl 150 mesh
   65 kg Fused Silica 350 mesh
Der pH-Wert der fertigen Back-up-Tauchmasse lag zwischen 9 - 10 Einheiten. Die Ist-Viskosität lag im Rahmen der Soll-Viskosität, und zwar zwischen 33 und 41 s nach Zahncup 2. Der rechnerische Feststoffanteil an kolloidalem SiO₂ im Binder wurde auf 21.5 % eingestellt. Der rechnerische Feststoffanteil des Hochpolymergehaltes im Binder lag bei ca. 7 %. Die Gesamtfeststoffmenge aus kolloidalem SiO₂ und Hochpolymer im Binder lag bei ca. 28.5 %.

Relative Luftfeuchte des Tauchraumes 50 +/- 5 %.
Temperatur des Tauchraumes 23° +/- 1° C.
Trockenzeit zwischen den Back-up-Schichten = 2.5 bis 3 Stunden.

Folgender Tauchrhythmus wurde nach dem 1. und 2. Tauchüberzug mittels Roboter eingehalten:
1. Tauchen für die 1. Back-up-Schicht in der Back-up-Tauchmasse und Besanden mit Al-Silikat, Korngröße 0.3 bis 0.5 mm, mittels Roboter.
2. Trocknung der aufgebrachten Back-up-Schicht 2.5 bis 3 Stunden.
3. Tauchen für die 2. Back-up-Schicht in der Back-up-Tauchmasse und Besandung mit 50 % Al-Silikat und 50 % Mullit 0.3 - 1 mm Körnung mittels Roboter.
4. Trocknung wie unter 2.
5. 3., 4. und 5. Back-up-Schicht wie unter 3. und 4.

Die entsprechenden Schalen wurden im 2-Schicht-Betrieb fertiggestellt. Insgesamt wurden 1.334 Trauben produziert.

Es wurden folgende mittlere Bruchbiegefertigkeitswerte (σ_{BB}) an keramischen Flachproben gemessen:

| | |
|---|---|
| Zustand der keramischen Flachproben | σ_{BB} |
| Grün | 450 - 660 N/cm² |
| Gebrannt | 480 - 710 N/cm² |
| Gebrannt und nachgetaucht | 590 - 870 N/cm² |

### 3. Beispiel

Es wurde in einem Produktionsmischbehälter folgende Back-up-Tauchmasse angemischt:
1. Binder 36 Gew.% = 434.8 kg
2. Füller 64 Gew.% = 737.7 kg
3. Gesamtmenge der
   Back-up-Tauchmasse 636.7 l = 1172.5 kg
4. Die 360.2 l Binder bestehen aus:
   247 l wässrigem kolloidalem 30%igem Silikasol
   57.2 l Deionisiertem Wasser
   56 l Hochpolymer
5. Die 737.7 kg Füller bestehen aus:
   335.3 kg Fused Silica Mehl < 120 mesh
   335.3 kg Mullitmehl 150 mesh
   67.1 kg Zirkon-Silikat 350 mesh
Der pH-Wert der fertigen Back-up-Tauchmasse lag zwischen 9 - 10 Einheiten. Die Ist-Viskosität lag im Rahmen der zwischenzeitlich aus fertigungstechnischen Gründen abgeänderten Soll-Viskosität, und zwar zwischen 28 und 36 s nach Zahncup 2. Die Gesamtfeststoffmenge aus kolloidalem SiO₂ und Hochpolymer im Binder lag bei 28.25 %.

Relative Luftfeuchte des Tauchraumes 50 +/- 5 %.
Temperatur des Tauchraumes 23° +/- 1° C.
Trockenzeit zwischen den Back-up-Schichten = 2.5 bis 3 Std.

Folgender Tauchrhythmus wurde nach dem 1. und 2. Tauchüberzug mittels Roboter eingehalten:
1. Tauchen für die 1. Back-up-Schicht in der Back-up-Tauchmasse und Besanden mit Al-Silikat, Korngröße 0.3 bis 0.5 mm, mittels Roboter.
2. Trocknung der aufgebrachten Back-up-Schicht 2.5 bis 3 Stunden.
3. Tauchen für die 2. Back-up-Schicht in der Back-up-Tauchmasse und Besandung mit 50 % Al-Silikat und 50 % Mullit 0.3 - 1.0 mm Körnung mittels Roboter.
4. Trocknen wie unter 2.
5. 3., 4. und 5. Back-up-Schicht wie unter 3. und 4.

Die entsprechenden Schalen wurden im 2-Schicht-Betrieb fe tiggestellt. Insgesamt wurden 333 Trauben produziert.

Es wurden folgende mittlere Bruchbiegefestigkeitswerte (σ_{BB}) an keramischen Flachproben gemessen:

| | |
|---|---|
| Zustand der keramischen Flachproben | σ_{BB} |
| Grün | 417 N/cm² |
| Gebrannt | 582 N/cm² |
| Gebrannt und nachgetaucht | 696 N/cm² |

### 4. Beispiel:

In einem Mischbehälter von 600 mm Durchmesser und 630 mm Höhe wurde folgende Back-up-Tauchmasse angesetzt:
1. Binder 36 Gew.% = 73.7 kg
2. Füller 64 Gew.% = 130.9 kg
3. Gesamtmenge der
   Back-up-Tauchmasse 113 l = 204.6 kg
4. Die 73.7 kg, entsprechend 61.6 l, bestehend aus:
   58.7 l Wässrigem kolloidalem 30%igem Silikasol
   2.9 l Hochpolymer mit Zusatz
5. Die 130.9 kg Füller bestehend aus:
   59.5 kg Fused Silica Mehl <120 mesh
   59.5 kg Mullitmehl 150 mesh
   11.9 kg Zirkon-Silikat 350 mesh

Es ergab sich eine Becherauslaufviskosität nach Zahncup 2 von 43 s. Durch Erniedrigung des Fülleranteils auf ca. 61 Gew.% wurde die Auslaufviskosität auf 36 s erniedrigt und lag damit im Rahmen der Sollauslaufviskosität von 28 - 36 s.

Es wurden Wachstrauben aus der Produktion und 2 Trauben Biegeproben wie üblich mit dem 1. und 2. Tauchüberzug versehen und dann mit der Back-up-Tauchmasse obiger Zusammensetzung wie folgt getaucht:
1. Tauchen für die 1. Back-up-Schicht in der Back-up-Tauchmasse und Besanden mit Al-Silikat, Korngröße 0.3 bis 0.5 mm, von Hand
2. Trocknung der aufgebrachten Back-up-Tauchmasse 2.5 bis 3 Stunden
3. Tauchen für die 2. Back-up-Schicht in der Back-up-Tauchmasse und Besandung mit 50 % Al-Silikat und 50 % Mullit, 0.3 - 1 mm Körnung, von Hand
4. Trocknung wie unter 2.
5. 3., 4. und 5. Back-up-Schicht wie 3. und 4. Dieses bedeutet, daß die Schalen im 2-Schichtbetrieb fertiggestellt wurden.

Die relative Luftfeuchtigkeit betrug 50 +/- 5 %, Umgebungs-Temperatur = 23° +/- 1° C.
Die Trocknung erfolgte teilweise mit Ventilatorunterstützung.

Die ausgebrachten kernreichen Gußstücke waren von sehr guter Qualität.
Es wurden folgende mittlere Biegebruchfestigkeitswerte an keramischen Flachproben gemessen:

| | |
|---|---|
| Zustand der keramischen Flachproben | σ_{BB} |
| Grün | 366 - 394 N/cm² |
| Gebrannt | 558 - 684 N/cm² |
| Gebrannt und nachgetaucht | 725 - 807 N/cm² |

### 5. Beispiel:

In einem Produktionsmischbehälter wurde folgende Back-up-Tauchmasse angesetzt:
1. Binder 37 Gew.% = 426 kg
2. Füller 63 Gew.% = 726 kg
3. Gesamtmenge der
   Back-up-Tauchmasse 637 l = 1152 kg
4. Die 426 kg Binder, entsprechend 360 l, bestehen aus:
   331 l wässrigem kolloidalem 30%igem Silikasol
   29 l Emulsion einer siliciumorganischen Verbindung
5. Die 726 kg Füller bestehen aus:
   330 kg Fused Silica Mehl < 120 mesh
   330 kg Mullitmehl 150 mesh
   66 kg Zirkonmehl 350 mesh
Der pH-Wert der fertigen Back-up-Tauchmasse lag zwischen 9 und 10 Einheiten. Die Ist-Viskosität lag im Rahmen der Soll-Viskosität, und zwar zwischen 24 und 28 s nach Zahncup 2.
Die relative Luftfeuchtigkeit des Tauchraumes betrug 50 ± 5%.

Die Temperatur des Tauchraumes betrug 23° ± 1° C.

Die Trockenzeit zwischen den Back-up-Schichten betrug 2.5 bis 3 Stunden.

Folgender Tauchrhythmus wurde nach dem 1. und 2. Tauchüberzug mittels Roboter eingehalten.
1. Tauchen für die 1. Back-up-Schicht in der Back-up-Tauchmasse und Besanden mit Al-Silikat, Korngröße 0.3 bis 0.5 mm, mittels Robot.
2. Trocknung der aufgebrachten Back-up-Schicht über 2.5 bis 3 Stunden.
3. Tauchen für die 2. Back-up-Schicht in der Back-up-Tauchmasse und Besandung mit 50 % Al-Silikat und 50 % Mullit, Körnung 0.3 bis 1.0 mm, mittels Robot.
4. Trocknung wie unter 2.
5. 3., 4. und 5. Back-up-Schicht wie unter Punkt 3. und 4.

Die entsprechenden Schalen wurden im 2-Schicht-Betrieb angefertigt.

Es wurden folgende Bruchbiegefestigkeitswerte (σ_{BB}) an keramischen Flachproben gemessen:

| | |
|---|---|
| Zustand der keramischen Flachproben: | σ_{BB} |
| Grün | 400 - 600 N/cm² |
| Gebrannt | 470 - 690 N/cm² |
| Gebrannt und nachgetaucht | 620 - 750 N/cm² |

## Patentansprüche

1. Verfahren zur Herstellung von keramischen Schalen als Gießform, wobei
a) ein ausschmelzbares oder auslösbares Modell eines zu gießenden Teils hergestellt wird,
b) das Modell in eine Tauchmasse aus einer Aufschlämmung eines feuerfesten Materials und eines Binders, der ein kolloidales, wässriges Silikasol enthält, eingetaucht wird, um einen feuchten Überzug auf dem Modell zu bilden,
c) auf den Überzug ein grobes, feuerfestes Pulver aufgesprenkelt wird,
d) der Überzug getrocknet wird,
e) die Schritte b), c) und d) wiederholt werden, bis die Schale die gewünschte Dicke erreicht hat,
dadurch gekennzeichnet, daß die Tauchmasse als Binder eine Dispersion aus wässrigem kolloidalem Kieselsol enthält, dem eine Emulsion aus der Gruppe der siliciumorganischen Verbindungen in einer Menge von 0-20 Gew.%, vorzugsweise 0,005-15 Gew.% bezogen auf den Gesamtwassergehalt des Binders zugesetzt wird, so daß ein Überzug entsteht, der nach dem Trocknen wasserundurchlässig, aber wasserdampfdurchlässig ist.

2. Verfahren zur Herstellung von keramischen Schalen als Gießform, wobei
a) ein ausschmelzbares oder auslösbares Modell eines zu gießenden Teils hergestellt wird,
b) das Modell in eine Tauchmasse aus einer Aufschlämmung eines feuerfesten Materials und eines Binders, der ein kolloidales, wässriges Silikasol und Polymere enthält, eingetaucht wird, um einen feuchten Überzug auf dem Modell zu bilden,
c) auf den Überzug ein grobes, feuerfestes Pulver aufgesprenkel wird,
d) der Überzug getrocknet wird,
e) die Schritte b), c) und d) wiederholt werden, bis die Schale die gewünschte Dicke erreicht hat,
dadurch gekennzeichnet, daß die Tauchmasse als Binder eine Dispersion aus wässrigem kolloidalem Kieselsol enthält, dem synthetische Hochpolymere mit hydrophobierendem und/oder hydrophobem Charakter in einer Menge von 2 bis 20 Vol.%, vorzugsweise von 3 bis 7 Vol.% und ein Zusatz von 0,2-20 Gew.%, bezogen auf das Gewicht des synthetischen Hochpolymers, einer Emulsion aus der Gruppe der siliciumorganischen Verbindungen zugesetzt werden, so daß ein Überzug entsteht, der nach dem Trocknen wasserundurchlässig, aber wasserdampfdurchlässig ist.

3. Verfahren nach Anspruch 1, gekennzeichnet durch die Verwendung einer Emulsion aus der Gruppe der siliciumorganischen Verbindungen mit Tröpfchengrößen dieser Verbindungen von < 200 nm.

4. Verfahren nach mindestens einem der vorhergehenden Ansprüche, dadurch gekennzeichnet, daß dem Binder ein Entspannungsmittel zugesetzt wird.

5. Verfahren nach Anspruch 4, dadurch gekennzeichnet, daß das Entspannungsmittel in einer Menge von 0,08 Vol.%, bezogen auf die Tauchmassenmenge, zugesetzt wird.

6. Verfahren nach mindestens einem der vorhergehenden Ansprüche 2 bis 5 gekennzeichnet durch die Verwendung eines Hochpolymers mit den folgenden Kenndaten:
| | |
|---|---|
| Festkörper | 50 +/- 1 Gew.% |
| Viskosität bis 20° C (D = 57⁻¹) | 800 - 1500 mPa.s |
| pH-Wert | 7.0 - 8.5 |
| Dichte | ca. 1.02 g/cm³ |
| Filmbeschaffenheit | zähelastisch, wasserfest, alkalibeständig. |

7. Verfahren nach mindestens einem der vorhergehenden Ansprüche, gekennzeichnet durch die Verwendung einer Emulsion aus der Gruppe der siliciumorganischen Verbindungen mit den folgenden Kenndaten:
| | |
|---|---|
| Festkörperanteil | 52 - 57 Gew.% |
| Viskosität | 25 mPa.s |
| Dichte | ca. 1 g/cm³ |
| Lösemittel | Wasser |
| pH-Wert | 7 - 9. |

8. Verfahren nach mindestens einem der vorhergehenden Ansprüche, dadurch gekennzeichnet, daß die Dispersion aus wässrigem Kieselsol und synthetischen Hochpolymeren und/oder einer Emulsion aus der Gruppe der siliciumorganischen Verbindungen erst kurz vor ihrem Einsatz hergestellt und zur Tauchmasse verarbeitet wird.

9. Binder für eine Tauchmasse zur Herstellung von keramischen Schalen als Gießform, der ein kolloidales wässriges Silikasol enthält, gekennzeichnet durch die Verwendung der in mindestens einem der Ansprüche 1 bis 8 angegebenen Zusammensetzungen.

## Claims

1. Process for the manufacture of ceramic shells for use as moulds in which
a) a fusible or removable pattern of a part to be cast is produced,
b) the pattern is dipped in a slurry of refractory material and a binder which contains a colloidal, aqueous silica sol to form a humid coat on the pattern,
c) a coarse, refractory powder is sprinkled onto the coat,
d) the coat is dried,
e) the steps b), c) and d) are repeated until the shell has obtained the desired thickness,
**characterized in that** the dip contains as a binder a dispersion of an aqueous colloidal silica sol to which is added an emulsion from the group of silicon-organic compounds in a quantity of 0 - 20 % by weight, preferably 0.005 - 15 % by weight referred to the total water content of the binder so that the coat is formed which after drying is impermeable to water but permeable to water vapour.

2. Process for the manufacture of ceramic shells for use as moulds in which
a) a fusible or removable pattern of a part to be cast is produced,
b) the pattern is dipped in a slurry of refractory material and a binder which contains a colloidal, aqueous silica sol and polymers to form a humid coat on the pattern,
c) a coarse, refractory powder is sprinkled onto the coat,
d) the coat is dried,
e) the steps b) c) and d) are repeated until the shell has obtained the desired thickness,
**characterized in that** the dip contains as a binder a dispersion of an aqueous colloidal silica sol to which are added synthetic high polymers with hydrophobic making character and/or hydrophobic character in a quantity of 2 to 20 % by volume, preferably 3 to 7 % by volume as well as an emulsion from the group of the silicon-organic compounds of 0.2 to 20 % by weight referred to the weight of the synthetic high polymer, so that a coat is formed which after drying is impermeable to water but permeable to water vapour.

3. Process according to claim 1, **characterized in that** an emulsion from the group of the silicon-organic compounds is used with droplet size of these compounds < 200 nm.

4. Process according to at least one of the preceding claims, **characterized in that** a surfactant is added to the binder.

5. Process according to claim 4, **characterized in that** the surfactant is added in a quantity of 0.08 % by volume, referred to the volume of the dip.

6. Process according to at least one of the preceding claims **characterized in that** a high polymer with the following characteristics data is used:
| | |
|---|---|
| Solids: | 50 +/- 1 % by weight |
| Viscosity at 20 °C (D = 57⁻¹) | 800 to 1,500 mPa.s |
| pH-value | 7.0 to 8.5 |
| Density | approx. 1.02 g/cm³ |
| Film condition | viscoplastic, waterproof, alkaliproof |

7. Process according to at least one of the preceding claims **characterized in that** an emulsion of the group of the silicon-organic compounds with the following characteristics data is used:
| | |
|---|---|
| Quantity of solids | 52 to 57 % by weight |
| Viscosity | 25 mPa.s. |
| Density | approx. 1 g/cm³ |
| Solvent | water |
| pH-value | 7 to 9 |

8. Process according to at least one of the preceding claims **characterized in that** the dispersion of aqueous silica sol and synthetic high polymers and/or an emulsion from the group of silicon-organic compounds is prepared and processed into the dip only shortly before it is used.

9. Binder for a back-up dip for the manufacture of ceramic shells for use as moulds which contains a colloidal aqueous silica sol **characterized in that** the compounds are used which are defined in at least one of the claims 1 to 8.

## Revendications

1. Procédé de fabrication de coquilles céramiques destinées à servir de moules, dans lequel
a) on fabrique un modèle d'une partie à couler susceptible d'être fondu ou dissous,
b) on plonge le modèle dans une masse de trempage, composée d'une suspension d'un matériau réfractaire et d'un liant, qui contient un sol de silice colloïdal, aqueux, afin de former une enveloppe humide sur le modèle,
c) on éparpille sur l'enveloppe une poudre grossière et réfractaire,
d) on sèche l'enveloppe,
e) les étapes b), c) et d) étant répétées jusqu'à ce que la coquille ait atteint l'épaisseur souhaitée,
caractérisé en ce que la masse de trempage, contient comme liant une dispersion composée d'un sol de silice aqueux colloïdal auquel est ajoutée une émulsion, appartenant au groupe des composés organiques de silicium, dans une proportion de 0 à 20 % en poids, de préférence 0,005 à 15 % en poids, par rapport au contenu total en eau du liant, afin que se forme une enveloppe qui, après séchage, est imperméable à l'eau, mais perméable à la vapeur d'eau.

2. Procédé de fabrication de coquilles céramiques destinées à servir de moules, dans lequel
a) on fabrique un modèle d'une partie à coule susceptible d'être fondu ou dissous,
b) on plonge le modèle dans une masse de trempage, composée d'une suspension d'un matériau réfractaire et d'un liant qui contient un sol de silice colloïdal aqueux et des polymères, afin de former une enveloppe humide sur le modèle,
c) on éparpille sur l'enveloppe une poudre grossière et réfractaire,
d) on sèche l'enveloppe,
e) les étapes b), c) et d) étant répétées jusqu'à ce que la coquille ait atteint l'épaisseur souhaitée,
caractérisé en ce que la masse de trempage, utilisée comme liant, contient une dispersion composée d'un sol de silice aqueux colloïdal auquel sont ajoutés des hauts polymères synthétiques ayant un caractère rendant hydrophobe et/ou hydrophobe, dans une proportion de 2 à 20 % en volume, de préférence 3 à 7 % en volume, et une addition de 0,2 à 20 % en poids par rapport au poids du haut polymère synthétique du liant, d'une émulsion, appartenant au groupe des composés organiques de silicium, afin que se forme une enveloppe qui, après séchage, est imperméable à l'eau, mais perméable à la vapeur d'eau.

3. Procédé selon la revendication 1, caractérisé en ce que l'on utilise une émulsion appartenant au groupe des composés organiques de silicium, à gouttelettes de ces composés d'une taille inférieure à 200 nm.

4. Procédé selon au moins l'une des revendications précédentes, caractérisé en ce qu'on ajoute au liant un moyen de détente.

5. Procédé selon la revendication 4, caractérisé en ce que le moyen de détente est ajouté dans une proportion de 0,08 % en volume par rapport à la quantité de masse de trempage.

6. Procédé selon au moins l'une des revendications précédentes 2 à 5, caractérisé en ce que l'on utilise un haut polymère ayant les caractéristiques suivantes :
| | |
|---|---|
| solide | 50 +/- 1 % en poids |
| viscosité jusqu'à 20° C (D = 57⁻¹) | 800 à 1500 mPa.s |
| valeur du pH | 7,0 à 8,5 |
| densité | environ 1,02 g/cm³ |
| nature du film | viscoélastique, étanche à l'eau, résistant aux alcalis. |

7. Procédé selon au moins l'une des revendications précédentes, caractérisé en ce que l'on utilise une émulsion appartenant au groupe des composés organiques de silicium ayant les caractéristiques suivantes :
| | |
|---|---|
| proportion de solide | 52 à 57 % en poids |
| viscosité | 25 mPa.s |
| densité | environ 1 g/cm³ |
| solvant | eau |
| valeur du pH | 7 à 9. |

8. Procédé selon au moins l'une des revendications précédentes, caractérisé en ce que la dispersion composée d'un sol de silice aqueux et de hauts polymères synthétiques et/ou d'une émulsion appartenant au groupe des composés organiques de silicium est fabriquée peu de temps avant son utilisation et est transformée en masse de trempage.

9. Liant destiné à une masse de trempage pour la fabrication de coquilles céramiques comme moules, liant qui contient un sol de silice colloïdal aqueux, caractérisé en ce que l'on utilise les compositions indiquées dans au moins l'une des revendications 1 à 8.
